# EUROPEAN PATENT APPLICATION

(11) **EP 1 357 281 A2**
(43) Date of publication of application: **29.10.2003**
(21) Application number: 03009223.3
(22) Date of filing: 23.04.2003
(51) Int. Cl.: F02F 1/38, F02B 3/06

(54) **Internal combustion engine with a combustion chamber**

(30) Priority: 26.04.2002 AR 0201534
(71) Applicant: Ecologic Motor S.A., Buenos Aires (AR)
(72) Inventor: Sananes, José Franklin, Buenos Aires (AR)
(74) Representative: Deambrogi, Edgardo

(57) **Abstract**

An internal combustion engine with a new combustion chamber comprising:
- short-flap pistons having an absolutely flat head;
- a cylinder cover having an absolutely flat bottom surface, and
- a distance "X" between the piston head and the bottom surface of the cylinder cover when the piston is at its TDC, which forms the combustion chamber, i.e., the space comprised between the piston's top surface or piston head, the walls of the cylinder, and the bottom flat surface of the cylinder cover.

## Description

### Field of the Invention

The present invention relates to an improvement in an internal combustion engine that allows bringing down temperature inside the combustion chamber while the engine is running and thus involves both structural and functional advantages.

More specifically, the present invention relates to an internal combustion engine provided with a new and improved combustion chamber which may be used in pressurized natural gas-, gasoline-, and gas oil-fuelled engines, as well as in engines that use any other kind of fuel, since the principles of this patent are universally applicable to any kind of internal combustion engine. In effect, the new chamber herein described succeeds in lowering the working temperature during internal combustion thus providing more efficiency during combustion and, therefore, higher power, besides higher durability for the engine itself.

### Background of the Invention

By definition, thermal engines generate heat while running. In the case of internal combustion engines, heat is basically generated by the ignition of the fuel-air explosive mixture in each cycle, thus requiring the engine to be provided with a means for dissipating heat. For such purpose, both the engine block and cylinder cover are provided with ducts along which a refrigerating liquid circulates in order to extract heat at the critical engine points where heat is generated (for example, near the combustion chamber) and liberate it into thermal exchange areas, for example the radiator. It is obvious that the capacity of refrigerating liquids to absorb heat is limited, and depends not only on their physicochemical properties, but also on capacity and depends on the possibility of the engine of quickly dissipating said heat, through an effective heat-exchange system.

Attaining a working regime with the lowest temperature possible has been a permanent concern for engine manufacturers, convinced as they have always been, based on empirical and scientific considerations, that temperature inside the combustion chamber and at the engine in general is inversely proportional to the engine's efficiency, horsepower and performance.

For this reason, modern engines include sophisticated refrigerating systems for cylinders, the cylinder cover, pistons and any other moving part, systems that guarantee a reasonable temperature level that does not heavily affect the engine's overall performance.

However, since heat is generated by the continuous ignition of the mixture inside the combustion chamber, the greatest problem arises there, since a great amount of heat energy is concentrated in a certain area and must be quickly dissipated. In order to solve the problem posed by high temperatures inside the combustion chamber and, considering the impossibility of lowering it significantly in that area, engine designers have developed several solutions, ranging from the design of sophisticated refrigerating systems to the design of alternative geometries for the combustion chamber.

Frequently, the combustion chamber is formed at the cylinder cover, that is to say, the cylinder cover is provided with a dome-shaped cavity according to which inlet valves, exhaust valves, and sparking plugs are laid out on said cover. This dome determines a chamber wherein the mixture, once compressed, encounters the spark generated by the sparking plug. In Diesel engines, the chamber is determined by the piston itself, which has a hollow in its head where the explosion of the mixture takes place.

In all the cases described above, previous art pistons move along the upstroke during compression until they are flush with the cylinder, that is to say, until they reach the upper rim of the last cylinder, and the explosion occurs from that point upwards, i.e., inside the chamber that is formed at the cylinder cover itself or inside the piston in the case of Diesel engines.

Both these circumstances are critical for the engine, since it is very difficult to properly refrigerate both such places in order to lower overall engine temperature and, particularly, the temperature at the combustion chamber itself.

Thus, in practice, the average temperature at the combustion chamber is around 1,300 °C, a level which is very difficult to refrigerate properly in practice.

In effect, the engine includes ducts conveying the refrigerating liquid, which are placed around the cylinders and inside the cylinder cover, but the generated heat is so high that they are not effective enough to dissipate such heat.

This circumstance is especially critical in heavyweight engines fuelled with pressurized natural gas, particularly in the case of engines originally conceived as Diesel-cycle engines and later transformed into gas-fuelled Otto-cycle engines. In effect, such original Diesel engines are not provided with the sophisticated refrigerating means of original gasoline engines: therefore, dissipating the heat generated by the ignition of the gas-air mixture is not possible in practice.

### Summary of the Invention

One purpose of the present invention is, precisely, to improve the combustion chamber so that the internal combustion engine may work at temperatures significantly lower than those attained at present, thus improving its efficiency, horsepower, durability and fuel consumption.

The present invention comprises basically an engine provided with a flat-headed piston, a corresponding absolutely flat cylinder cover which does not include any kind of chamber inside, wherein the piston height is lower than the traditional ones and its head lies near the top dead center (TDC), far from the cylinder's top rim. The gap in the cylinder comprised between the piston head at the TDC and the flat cylinder cover constitutes the combustion chamber where the mix is ignited. Since the piston is surrounded by ducts internal to the block conveying the aforementioned refrigerating liquid, the ignition heat is dissipated into the piston walls, and thus quickly and effectively channeled out so that the engine's temperature in that area is lowered significantly. It has been proven through practical tests that in an engine working at an average temperature inside the chamber of about 1,300 °C according to its original design, it is possible to lower chamber temperature to less than 800 °C when the simple improvements herein proposed are implemented, thus reducing temperature by 40% in the average. Such a lower temperature improves running, increases horsepower, extends parts durability, decreases fuel consumption and raises thermal efficiency.

### Brief Description of the Drawings

Figure 1 shows an overall and perspective view of an engine of the previous art; in this particular case it is a Diesel-cycle engine shown partially in transparency so as to expose the block, pistons, cylinder cover, and inlet and exhaust devices.
Figure 2 is a perspective view illustrating a typical piston of the previous art with the combustion chamber inside.
Figure 3 is a schematic cutaway diagram of an engine according to the present invention, where the piston at the TDC, the flat cylinder cover, and inlet and exhaust devices are all visualized. The "X" in the diagram indicates the distance between the flat piston head and the bottom flat surface of the cylinder cover at said TDC.
Figure 4 is a detailed view in perspective of a piston according to the present invention.

### Detailed Description of the Preferred Embodiment

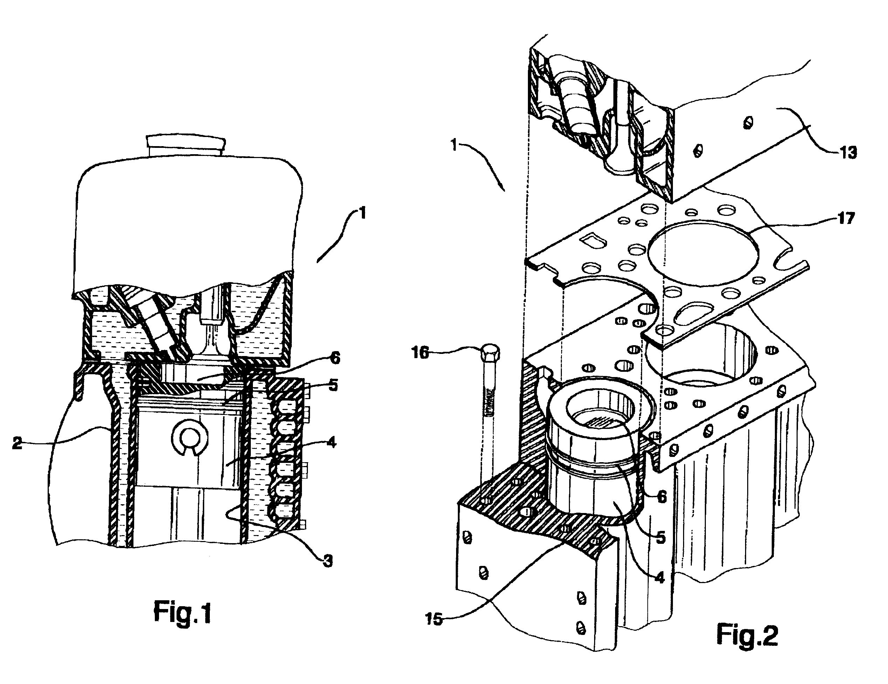

In full agreement with the above descriptions and illustrations, a previous art engine 1 is shown, including a block 2, the cylinders 3 where the pistons 4 are housed and, at their heads 5, a hollow 6 that defines the engine's combustion chamber. In effect, when the piston is inside the cylinder and the cylinder cover encloses the resulting cavity, as the piston reaches the TDC the only space left free for ignition to occur is this hollow 6, since the piston at the TDC is flush with the cylinder's upper rim and no space other than this hollow 6 is left for the fuel-air mix to explode under compression (it should be reminded that the sample engine is a Diesel engine). Therefore, at the TDC, no space is left between the flat bottom surface of the cylinder cover and the piston head. Figure 2 shows a detail of such a piston and said hollow 6 which defines the combustion chamber.

In Otto-cycle engines, the combustion chamber is not located in the piston itself but in the cylinder cover, since such cover presents a dome-shaped profile in a sectional view that defines the space left free for the ignition of the mix, because in this type of engines the piston at its TDC is flush with the cylinder cover and that dome-shaped cavity is the only space left for ignition to occur.

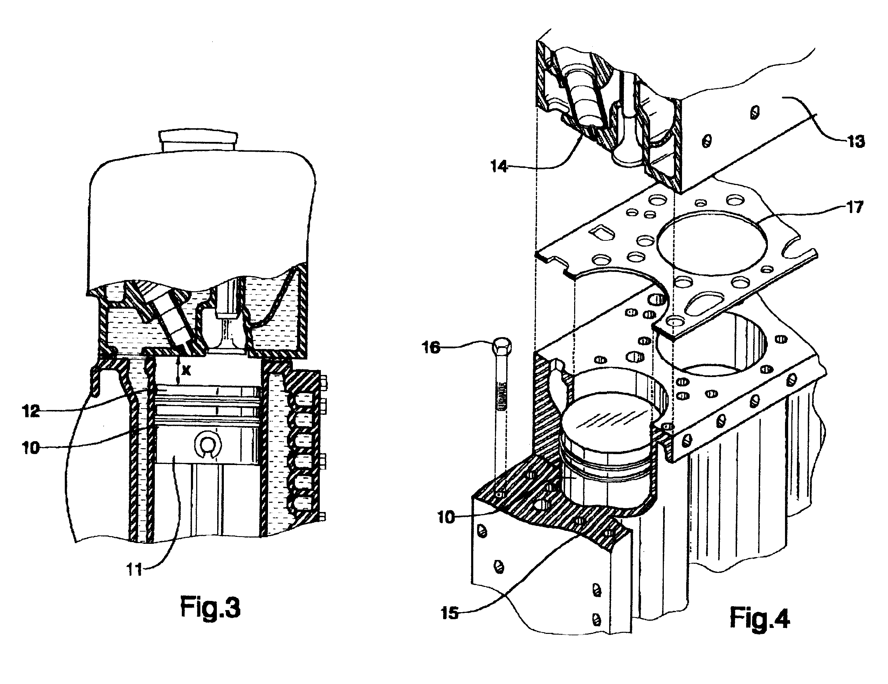

The purpose of the present invention is to put an end to these types of developments, since practical experience has widely demonstrated they entail numberless refrigeration difficulties. Therefore, Figure 3 should now be emphasized because it plainly illustrates the simple and ingenious solution proposed in the present invention, which consists in:
- a piston 10 having a shorter flap 11 and an absolutely flat head 12,
- a cylinder cover 13 having an absolutely flat bottom surface 14, held in place into the block 15 by screws 16 provided with a joint 17 in between, and
- a distance "X" between the head 12 of the piston 10 and the surface 14 of cylinder cover 13 whenever the piston 10 is at its TDC.

Since the cylinder is surrounded by ducts that convey the refrigerating liquid towards the exchanger, heat dissipation, unlike what is usual in previous art engines, is more rapid and efficient in this area, and therefore the temperature at the chamber does not exceed 800 °C in the average. Such an improved dissipation is fundamentally due to the fact that in this case the combustion chamber is formed in the space comprised between the cylinder wall on its side, the piston head below, and the flat surface of the cylinder cover above. Therefore, dissipation occurs basically through the refrigerated cylinder walls, thus decreasing the chamber's temperature, according to the explanation above.

Thus, the problem of refrigerating the combustion chamber is easily solved according to the present invention whereas it could not be solved in the previous art because the piston or the cylinder cover required refrigeration and this could not be achieved in practice.

## Claims

1. An internal combustion engine with a new combustion chamber comprising:
- short-flap pistons having an absolutely flat head;
- a cylinder cover the bottom surface of which is absolutely flat, and
- a distance "X" between the piston head and the bottom surface of the cylinder cover when the piston is at its TDC, which forms the combustion chamber, i.e., the space comprised between the piston's top surface or piston head, the walls of the cylinder, and the bottom flat surface of the cylinder cover.
